# EUROPEAN PATENT APPLICATION

(11) **EP 3 848 415 A1**
(43) Date of publication of application: **14.07.2021**
(21) Application number: 19939609.4
(22) Date of filing: 26.07.2019
(51) Int. Cl.: C08L 67/02, C08G 63/16, C09D 5/03

(54) **POLYESTER RESIN AND PREPARATION METHOD THEREFOR, COATING, AND WORKPIECE**

(71) Applicant: Kinte Materials Science and Technology Co., Ltd., Dongguan, Guangdong 523000 (CN)
(72) Inventor: ZENG, Li, Guangzhou, Guangdong 510860 (CN); LI, Yong, Guangzhou, Guangdong 510860 (CN); XIE, Jing, Guangzhou, Guangdong 510860 (CN); LIU, Liang, Guangzhou, Guangdong 510860 (CN); GU, Yuxin, Guangzhou, Guangdong 510860 (CN)
(74) Representative: Mola, Edoardo
(86) International application number: PCT/CN2019/097826
(87) International publication number: WO 2021/016731

(57) **Abstract**

The present disclosure discloses a polyester resin and a preparation method thereof, a coating and a workpiece. The polyester resin has an acid value of 48 mgKOH/g to 55 mgKOH/g, a glass transition temperature of 68°C to 75°C, a softening point of 110°C to 115°C, and a melt viscosity of 7,000 mPa•s to 10,000 mPa•s at 200°C; and the polyester resin is prepared from the following raw materials in percentage by mass: 20% to 35% of aliphatic diol, 5% to 25% of aromatic heterocyclic diol, 45% to 60% of aromatic diacid, 5% to 10% of blocking agent, 0.6‰ to 1.5‰ of esterification catalyst, and 0.5% to 3% of auxiliary agent. In this way, the polyester resin of the present disclosure is suitable for using in a powder coating of a TGIC curing system, and a cured coat has excellent heat resistance and blooming resistance, which can solve the problems of insufficient heat resistance and easy blooming of the existing polyester powder coating.

## Description

### FIELD OF THE INVENTION

The present disclosure relates to the field of polyester resin synthesis technologies, and more particularly, to a polyester resin and a preparation method thereof, a coating and a workpiece.

### BACKGROUND OF THE INVENTION

Powder coatings are gradually replacing traditional solvent-based liquid coatings due to their features like harmlessness, high efficiency, resource saving, environmental protection and excellent performance, and become an important development trend in the coating industry. As one of the important part of the powder coating, a polyester powder coating has occupied half of the total amount of powder coatings due to its outstanding advantages in economy, decoration, weather resistance, mechanical properties and film adhesion. With the rapid development of economy and the continuous updating of science and technology, various new products are available in the market, which puts forward higher requirements on the performances of the powder coatings. Under this background, the development and application of some functional products have gradually become one of the development orientations of the powder coatings.

By investigating the performances of the existing polyester powder coatings, it is found that the existing polyester powder coatings often have the problems of insufficient heat resistance and "blooming" when the coats are coated thickly on workpieces or cured at low temperature. Specifically, the coats of the existing polyester powder coatings may be used for a long time under the temperature of lower than 150°C, but in an environment higher than 200°C, the coats will show obvious failure phenomena such as gloss loss, adhesion reduction, coat embrittlement, flexibility reduction and pulverization, which makes the coats lose protective effects on substrates. For the polyester powder coatings, there are a large number of ester bonds in a film forming matter, which are easy to degrade and break at a high temperature, thus greatly reducing the protective effects on the substrates, greatly limiting the application of the polyester powder coatings in high temperature environments. In addition, when the existing polyester powder coating is applied to a thick-coating workpiece or low-temperature curing, due to uneven heat dissipation inside and outside the workpiece or low curing temperature after curing and cooling, micromolecules inside the coat penetrate into a surface of the coat to form a layer of white mist that is similar to the phenomenon of "blooming", which greatly reduces the gloss of the coat. Similar phenomena usually occur in electrical appliances with higher heat resistance requirements, such as microwave ovens and ovens. When the conventional high-temperature resistant polyester powder coatings are used for external coats of the microwave ovens and ovens, since the internal heat conducts to the external coats during the working of the electrical appliances, a layer of micromolecule white mist will appear on the surface of the coat after a period of time. According to literature reports, the micromolecule white mist is a 22-membered ring structure, which is a by-product during polyester synthesis, is formed by condensation of two molecules of terephthalic acid and two molecules of neopentyl glycol, and will greatly reduce the gloss of the coat.

The existing studies put forward some improvement technologies for heat resistance and blooming resistance of the polyester resin. At present, there are two main ways to improve the heat resistance of the polyester powder: one is physical blending modification, that is, a high-temperature resistant resin or filler is added into the polyester to improve a heat resistance of the polyester; and the other is chemical modification, that is, a heat-resistant monomer or intermediate is introduced into a main chain of the polyester to improve the heat resistance of the polyester powder coating, and increase a crosslinking density of the coat at the same time so as to improve the heat resistance of the polyester powder coating. In the above two ways, the former is easy to be incompatible if the addition amount of the high-temperature resistant resin or filler is too much, while the second way is relatively better. However, the high-temperature resistant resins prepared by the existing chemical modification technology are generally of traditional medium and low acid values (about 30 mgKOH/g), and are mostly used at 300°C for a short time in view of the heat resistance levels thereof, which cannot meet the requirements of higher temperature environment. In view of the blooming problem of the coat, the existing studies suggest that adding a certain amount of 2-butyl-2-ethyl-1,3-propanediol (BEPD) into the formulation of the polyester resin can improve the blooming resistance of the resin, but the addition of the BEPD will greatly reduce the heat resistance of the resin, and the prepared resin is not suitable for high temperature environment. At present, a synthetic technology of the polyester resin with high temperature resistance and blooming resistance has not been reported, so it is necessary to prepare a polyester resin with high temperature resistance and blooming resistance which can be used in a powder coating of a TGIC curing system.

### SUMMARY OF THE INVENTION

To solve the above technical problems, the present disclosure provides a polyester resin and a preparation method thereof, a coating and a workpiece. The polyester resin is suitable for using in a powder coating of a TGIC curing system, and a cured coat has excellent heat resistance and blooming resistance performance.

The technical solutions adopted in the present disclosure are as follows: a polyester resin, wherein the polyester resin has an acid value of 48 mgKOH/g to 55 mgKOH/g, a glass transition temperature of 68 °C to 75 °C, a softening point of 110°C to 115°C, and a melt viscosity of 7,000 mPa•s to 10,000 mPa•s at 200°C; and the polyester resin is prepared from the following raw materials in percentage by mass: 20% to 35% of aliphatic diol, 5% to 25% of aromatic heterocyclic diol, 45% to 60% of aromatic diacid, 5% to 10% of blocking agent, 0.6‰ to 1.5‰ of esterification catalyst, and 0.5% to 3% of auxiliary agent. The polyester resin is a carboxyl-terminated saturated polyester resin, which may be used in the preparation of the powder coating of the TGIC curing system.

Preferably, the polyester resin is prepared from the following raw materials in percentage by mass: 22% to 30% of aliphatic diol, 10% to 20% of aromatic heterocyclic diol, 50% to 58% of aromatic diacid, 7% to 9% of blocking agent, 0.8‰ to 1.5‰ of esterification catalyst, and 1% to 2% of auxiliary agent.

Preferably, the aromatic heterocyclic diol is at least one selected from the group consisting of 1,3-dimethylol-5,5-dimethylhydantoin and hydroxypropyl bisphenol A.

Preferably, the aliphatic diol is at least one selected from the group consisting of neopentyl glycol and ethanediol; and a content of the ethanediol is less than or equal to 10mol% based on a total amount of the aliphatic diol.

Preferably, the aromatic diacid comprises terephthalic acid and/or compound A, and the compound A is at least one selected from the group consisting of 4,4'-carbonyldibenzoic acid, 4,4-oxybisbenzoic acid and 4-4-biphenyldicarboxylic acid; and a content of the compound A is greater than or equal to 15mol% based on a total amount of the aromatic diacid.

Preferably, the blocking agent is at least one selected from the group consisting of isophthalic acid and adipic acid; and a content of the hexane diacid is less than or equal to 15mol% based on a total amount of the blocking agent.

Preferably, the auxiliary agent comprises an antioxidant and a flame-retardant. High-temperature resistant auxiliary agents are usually used as the auxiliary agent, and specifically, auxiliary with a thermal decomposition temperature above 300°C may be used. Further preferably, the antioxidant is at least one selected from the group consisting of antioxidant 1330 and antioxidant PEPQ, and the flame-retardant is melamine polyphosphate.

Preferably, the esterification catalyst is at least one selected from the group consisting of monobutyltin oxide, stannous oxalate, dibutyltin oxide and tetrabutyl titanate.

The present disclosure further provides a preparation method of the polyester resin mentioned above, comprising the following steps of:
S1. adding the aliphatic diol and the aromatic heterocyclic diol into a reaction kettle, and heating to melt; then adding the aromatic diacid and the esterification catalyst, introducing protective gas, continuously heating to react, heating to 180 °C to 190 °C until esterified water starts to be generated and distilled out; and gradually heating to 240°C to 245°C, and reacting until 95% to 97% of the esterified water is discharged and an acid value reaches 20 mgKOH/g to 25 mgKOH/g; and
S2. adding the blocking agent into the reaction kettle, reacting until the acid value reaches 59 mgKOH/g to 65 mgKOH/g, subjecting to a vacuum polycondensing reaction until the acid value reaches 48 mgKOH/g to 55 mgKOH/g and the melt viscosity is 7,000 mPa•s to 10,000 mPa•s; then stopping the vacuum polycondensing reaction, adding the auxiliary agent, uniformly mixing, cooling and then discharging.

In step S1, nitrogen or inert gas is generally used as the protective gas, and the inert gas comprises helium, neon, argon, krypton, xenon and radon. The protective gas is preferably selected from nitrogen.

The above polyester resin may be used in the preparation of coatings, such as the powder coating of the TGIC curing system. Therefore, the present disclosure further provides a coating comprising any of the above polyester resins. Specifically, the coating may be the powder coating of the TGIC curing system. Further, the above coating may be applied to a surface of a workpiece to form a protective coat. Therefore, the disclosure further provides a workpiece, wherein a coat formed by the coating above is attached to a surface of the workpiece.

The present disclosure has the following beneficial technical effects: the present disclosure provides a polyester resin and the preparation method thereof, a coating and a workpiece, wherein a certain amount of aromatic diacid containing a double benzene ring structure is introduced into a structural unit of the polyester resin, which can improve a proportion of a rigid structure in the main chain; the ester bonds in the main chain of the polyester can be protected by using the aromatic heterocyclic diols with better heat resistance to replace some aliphatic diols; a degradation rate of the prepared polyester resin at high temperature is much lower than that of the conventional polyester resin, and the blooming resistance performance of the polyester resin can be obviously improved; in addition, compared with the conventional polyester resin, the polyester resin of the present disclosure has a higher acid value; if the polyester resin of the present disclosure is applied to the powder coating of the TGIC curing system, a larger proportion of TGIC (epoxypropanol isocyanate) curing agent which has a triazine ring structure containing three epoxy groups is needed during curing, which can make a cured coating film have a higher crosslinking density and a higher rigid structure proportion, and can obviously improve the heat resistance of the polyester resin. In this way, the polyester resin of the present disclosure has excellent heat resistance and blooming resistance performance, and can be used for preparing coatings, such as the powder coating of the TGIC curing system, which can solve the problems of insufficient heat resistance and easy blooming of the existing polyester powder coatings, and is suitable for spraying fields with highe heat resistance requirements or the workpiece with large and thick structure.

### DETAILED DESCRIPTION OF THE EMBODIMENTS

The present disclosure will be further explained with reference to the specific embodiments below. It should be understood that these embodiments are only used to illustrate the present disclosure and are not used to limit the scope of the present disclosure. Moreover, after reading the contents described in the present disclosure, those skilled in the art can make various changes or modifications to the present disclosure, and these equivalent forms also fall within the scope of the present disclosure as defined in the claims.

Table 1 shows examples and comparative examples of polyester resins, wherein Examples 1 to 5 are five examples of the polyester resins according to the present disclosure. Comparative Example 1 refers to an anti-blooming polyester resin added with BEPD (2-butyl-2-ethyl-1,3-propanediol). Comparative Example 2 refers to a high-temperature resistant polyester resin with an acid value of about 30 mgKOH/g. Comparative Example 1 and Comparative Example 2 are compared with the present disclosure by reference.

In Table 1, neopentyl glycol, ethanediol and 2-butyl-2-ethyl-1,3-propanediol are aliphatic diols;
hydroxypropyl bisphenol A and 1,3-dimethylol-5,5-dimethylhydantoin are aromatic heterocyclic diols;
cyclohexanedimethanol is an alicyclic diol;
terephthalic acid, 4,4'-carbonyldibenzoic acid, 4,4- oxybisbenzoic acid and 4-4-biphenyldicarboxylic acid are aromatic diacids;
monobutyltin oxide is an esterification catalyst; isophthalic acid and adipic acid are blocking agents;
antioxidant 1330, antioxidant PEPQ, antioxidant 1010 and antioxidant M-1 are antioxidants;
the antioxidant 1330 is namely 1,3,5-trimethyl-2,4,6-tri(3,5-di-tert-butyl-4-hydroxybenzyl)benzene;
the antioxidant PEPQ is namley tetrakis(2,4-di-tert-butylphenyl-4,4'-diphenyl)-bis-phosphonate ester;
the antioxidant 1010 is namley [pentaerythritol tetrakis(β-(3,5-di-tert-butyl-4-hydroxyphenyl)propionate];
the antioxidant M-1 is namely bis(3,5-di-tert-butylphenyl)pentaerythritol diphosphite;
MPP (i.e., melamine polyphosphate) is flame-retardant; and the antioxidant and the flame-retardant are used as auxiliary agents.

The preparation method of the polyester resins in Examples 1 to 5 and Comparative Example 1 was as follows: adding the aliphatic diol and the aromatic heterocyclic diol in proportions listed in Examples 1 to 5 and Comparative Example 1 in Table 1 into a 10L reaction kettle, and heating until the reaction materials were melted; then adding the aromatic diacid and the esterification catalyst in a certain proportion successively, and introducing nitrogen, continuously heating to react, heating to 180°C to 190°C until esterified water started to be generated and distilled out; then gradually heating to 240 °C to 245 °C, and reacting for 15 hours to 20 hours after finishing feeding until 95% to 97% of the esterified water was discharged, sampling and detecting, wherein the reaction reached standard when the acid value reached 20 mgKOH/g to 25 mgKOH/g; adding the blocking agent to react for 2 hours to 4 hours until the acid value reached 59 mgKOH/g to 65 mgKOH/g, subjecting to a vacuum polycondensing reaction for about 2 hours to 3 hours until the acid value reached 48 mgKOH/g to 55 mgKOH/g and the melt viscosity was 7,000 mPa•s to 10,000 mPa•s; then stopping the vacuum polycondensing reaction, cooling to 205°C , adding the auxiliary agent, stirring uniformly, cooling and then discharging, thus obtaining the polyester resin product.

The preparation method of the polyester resin in Comparative Example 2 was as follows: adding the neopentyl glycol and the cyclohexanedimethanol in proportions listed in Comparative Example 2 in Table 1 into a 10L reaction kettle, and heating until the reaction materials were melted; then adding the terephthalic acid and the monobutyltin oxide in a certain proportion successively, and introducing nitrogen to gradually heat up to 245°C to 250°C, maintaining the reaction for 2 hours at this temperature, sampling and detecting, wherein the reaction reached standard when the acid value reached 18 mgKOH/g to 22 mgKOH/g; adding the isophthalic acid and the adipic acid to react for 2 hours to 3 hours until the acid value reached 42 mgKOH/g to 46 mgKOH/g, subjecting to a vacuum polycondensing reaction for about 2 hours to 3 hours until the acid value reached 32 mgKOH/g to 36 mgKOH/g; then stopping the vacuum polycondensing reaction, cooling to 205°C , adding the antioxidant 1010 and the oxidizing agent M-1, stirring uniformly, cooling and then discharging, thus obtaining the polyester resin product.

The performances of the polyester resins prepared in Embodiments 1 to 5 and Comparative Examples 1 to 2 were tested respectively, and the results were as shown in Table 1 below.

**Table 1 Synthesis formulation and performance of polyester resin**

| Ingredient | | Example 1 | Example 2 | Example 3 | Example 4 | Example 5 | Comparative Example 1 | Comparativ e Example 2 |
|---|---|---|---|---|---|---|---|---|
| Synthesis formulation (unit: g) | | | | | | | | |
| Neopentyl glycol | | 2,530 | 2,659 | 2,586 | 2,704 | 2,525 | 2,393 | 3,458 |
| Ethanediol | | 130 | 83 | / | / | / | 83 | / |
| 2-butyl-2-ethyl-1 ,3-propanediol | | / | / | / | / | / | 783 | / |
| Hydroxypropyl bisphenol A | | / | 805 | 1,509 | 1,032 | / | / | / |
| 1,3-dimethylol-5 ,5-dimethylhyda ntoin | | 550 | / | / | 658 | 934 | / | / |
| Cyclohexanedim ethanol | | / | / | / | / | / | / | 749 |
| Terephthalic acid | | 3,412 | 2,956 | 3,680 | 4,242 | 4,480 | 2,956 | 5,652 |
| 4,4'-carbonyldib enzoic acid | | 1,258 | 740 | / | / | 729 | 740 | / |
| 4,4-oxybisbenzo | | / | 1,060 | 1,430 | / | 696 | 1,060 | / |
| ic acid | | | | | | | | |
| 4-4-biphenyldica rboxylic acid | | 531 | 663 | / | 1178 | / | 663 | / |
| Monobutyltin oxide | | / | 9.0 | 10.2 | / | / | 9.3 | 13 |
| Stannous oxalate | | 8.5 | / | / | / | / | / | / |
| Tetrabutyl titanate | | / | / | / | 11.5 | 10.5 | / | / |
| Isophthalic acid | | 694 | 657 | 680 | 820 | 713 | 657 | 810 |
| Adipic acid | | 32 | 64 | / | / | 94 | 64 | 200 |
| Antioxidant 1330 | | 142 | / | 93 | 150 | 95 | / | / |
| Antioxidant PEPQ | | / | 56 | 65 | / | / | 150 | / |
| MPP | | 50 | 135 | 50 | 45 | 150 | 55 | / |
| Antioxidant 1010 | | / | / | / | / | / | / | 380 |
| Antioxidant M-1 | | / | / | / | / | / | / | 140 |

| Performance of polyester resin | | | | | | | | |
|---|---|---|---|---|---|---|---|---|
| Acid value (mgKOH/g) | | 49.5 | 52.1 | 50.8 | 51.3 | 53.4 | 51.8 | 32.6 |
| Softening point (°C) | | 111 | 111 | 112 | 114 | 113 | 109 | 116 |
| Glass transition temperature (°C) | | 69.5 | 69.1 | 71.4 | 73.3 | 72.6 | 63.8 | 62.5 |
| Viscosity (mPa•s /200°C) | | 7,640 | 7,400 | 8,260 | 9,240 | 9,040 | 6,720 | 4,500 |

The performance of the polyester resin prepared above could be reflected by the performance of the powder coating prepared. Therefore, according to the synthetic formulation in Table 2, the polyester resins prepared in Examples 1 to 5 and Comparative Examples 1 to 2 were respectively weighed and mixed with TGIC, the leveling agent, the titanium dioxide, the barium sulfate, the styrax and the brightener in proportion, melted by a screw extruder, extruded, tableted and crushed, and then crushed and sieved to prepare powder coatings. The powder coatings were sprayed on metal sheets after surface treatment (phosphating) by an electrostatic spray gun, and cured at 200°C/10min to obtain coats. The performances of the coats formed were tested, including gloss, impact resistance, adhesion, horizontal mobility, salt-mist performance, blooming resistance and heat resistance. The specific test methods comprised the followings:
1. the gloss was tested according to GB/T 9754-2007;
2. the impact resistance was tested according to GB/T 1732-1993;
3. the adhesion was tested according to GB/T 9286-1998;
4. the horizontal mobility was tested according to GB/T 1750-1979;
5. the salt-mist performance was tested according to GB/T 1771-91;
6. a method for testing the blooming resistance was: baking a cured workpiece at 140°C for 12 hours, and then carrying out gloss test and naked eye evaluation; and
7. a method for testing the heat resistance was: baking films at 300°C and 350°C for 1 hour respectively, and then measuring the gloss retention, impact resistance and adhesion of the film.

The specific formulation of each powder coating and the finally measured coat performances were shown in Table 2 below:

**Table 2 Formulation and coat performance of powder coating**

| | | Sample 1 | Sample 2 | Sample 3 | Sample 4 | Sample 5 | Sample 6 | Sample 7 |
|---|---|---|---|---|---|---|---|---|
| Polyester resin used | | Example 1 | Example 2 | Example 3 | Example 4 | Example 5 | Comparative Example 1 | Comparative Example 2 |
| Resin (g) | | 270 | 270 | 270 | 270 | 270 | 270 | 279 |
| TGIC (g) | | 30 | 30 | 30 | 30 | 30 | 30 | 21 |
| Titanium dioxide (g) | | 102 | 102 | 102 | 102 | 102 | 102 | 102 |
| Barium sulfate (g) | | 90 | 90 | 90 | 90 | 90 | 90 | 90 |
| Leveling agent (g) | | 4 | 4 | 4 | 4 | 4 | 4 | 4 |
| Styrax (g) | | 2 | 2 | 2 | 2 | 2 | 2 | 2 |
| Brightener 701 (g) | | 2.5 | 2.5 | 2.5 | 2.5 | 2.5 | 2.5 | 2.5 |

| Performance of powder coating | | | | | | | | |
|---|---|---|---|---|---|---|---|---|
| Appearance of the coat | | Even | Even | Even | Even | Even | Even | Even |
| Gloss (%) | | 91.2 | 91.9 | 91.8 | 91.3 | 91.4 | 91.6 | 91.7 |
| Horizontal mobility (mm) | | 26 | 26 | 25.5 | 25 | 25 | 26 | 26 |
| Impact performance (50 cm) | Positive impact | Pass | Pass | Pass | Pass | Pass | Pass | Pass |
| | Negative impact | Pass | Pass | Pass | Pass | Pass | Tiny -cracking | Pass |
| Blooming resistance | | No blooming | No blooming | No blooming | No blooming | No blooming | No blooming | Obvious blooming |
| Adhesion | | 0 | 0 | 0 | 0 | 0 | 0 | 0 |
| Salt-mist resistance | | No foaming | No foaming | No foaming | No foaming | No foaming | No foaming | No foaming |

| Heat resistance of coat | | | | | | | | |
|---|---|---|---|---|---|---|---|---|
| Gloss retention | 300°C/lh | 92.4% | 92.3% | 93.7% | 94.6% | 94.1% | 45.2% | 85.2% |
| | 350°C/lh | 87.2% | 87.9% | 88.7% | 89.5% | 88.9% | 3.4% | 13.1% |
| Adhesion | 300°C/lh | 0 | 0 | 0 | 0 | 0 | 4 | 1 |
| | 350°C/lh | 1 | 1 | 1 | 1 | 1 | 5 | 4 |
| Impact performance (50 cm) | 300°C/lh | Positive and negative impact passed | Positive and negative impact passed | Positive and negative impact passed | Positive and negative impact passed | Positive and negative impact passed | The coat fell off | Negative impact cracked |
| | 350°C/lh | Negative impactcracked twice | Negative impact cracked twice | Negative impact cracked once | Negative impact cracked once | Negative impact cracked once | The coat fell off | The coat fell off |

It can be seen from Table 2 that, the powder coatings prepared with the polyester resins in Examples 1 to 5 of the present disclosure have better blooming resistance and heat resistance than those of the powder coatings prepared with the polyester resins in Comparative Example 2, and have better heat resistance than that of the powder coatings prepared with the polyester resins in Comparative Example 1. Thus it can be seen that the polyester resin of the present disclosure has excellent heat resistance in the case of ensuring excellent blooming resistance performance. The powder coating of a TGIC curing system prepared with this polyester resin can solve the problems of insufficient heat resistance and easy blooming of the existing polyester powder coatings, and is suitable for spraying fields with highe heat resistance requirements or the workpiece with large and thick structure.

Although the present disclosure has been specifically shown and described with reference to the preferred embodiments, it should be understood by those skilled in the art that various changes can be made in form and detail without departing from the spirit and scope of the present disclosure as defined in the claims, which are the protection scope of the present disclosure.

## Claims

1. A polyester resin, wherein the polyester resin has an acid value of 48 mgKOH/g to 55 mgKOH/g, a glass transition temperature of 68°C to 75°C, a softening point of 110°C to 115°C, and a melt viscosity of 7,000 mPa•s to 10,000 mPa•s at 200°C; and the polyester resin is prepared from the following raw materials in percentage by mass: 20% to 35% of aliphatic diol, 5% to 25% of aromatic heterocyclic diol, 45% to 60% of aromatic diacid, 5% to 10% of blocking agent, 0.6‰ to 1.5‰ of esterification catalyst, and 0.5% to 3% of auxiliary agent.

2. The polyester resin according to claim 1, wherein the aromatic heterocyclic diol is at least one selected from the group consisting of 1,3-dimethylol-5,5-dimethylhydantoin and hydroxypropyl bisphenol A.

3. The polyester resin according to claim 1, wherein the aliphatic diol is at least one selected from the group consisting of neopentyl glycol and ethanediol; and a content of the ethanediol is less than or equal to 10mol% based on a total amount of the aliphatic diol.

4. The polyester resin according to claim 1, wherein the aromatic diacid comprises terephthalic acid and/or compound A, and the compound A is at least one selected from the group consisting of 4,4'-carbonyldibenzoic acid, 4,4- oxybisbenzoic acid and 4-4-biphenyldicarboxylic acid; and a content of the compound A is greater than or equal to 15mol% based on a total amount of the aromatic diacid.

5. The preparation method of the polyester resin according to claim 1, wherein the blocking agent is at least one selected from the group consisting of isophthalic acid and adipic acid; and a content of the hexane diacid is less than or equal to 15mol% based on a total amount of the blocking agent.

6. The preparation method of the polyester resin according to claim 1, wherein the auxiliary agent comprises an antioxidant and a flame-retardant; and preferably, the antioxidant is at least one selected from the group consisting of antioxidant 1330 and antioxidant PEPQ, and the flame-retardant is melamine polyphosphate.

7. The preparation method of the polyester resin according to any one of claims 1 to 6, wherein the esterification catalyst is at least one selected from the group consisting of monobutyltin oxide, stannous oxalate, dibutyltin oxide and tetrabutyl titanate.

8. A preparation method of the polyester resin according to any one of claims 1 to 7, comprising the following steps of:
S1. adding the aliphatic diol and the aromatic heterocyclic diol into a reaction kettle, and heating to melt; then adding the aromatic diacid and the esterification catalyst, introducing protective gas, continuously heating to react, heating to 180 °C to 190 °C until esterified water starts to be generated and distilled out; and gradually heating to 240°C to 245°C, and reacting until 95% to 97% of the esterified water is discharged and the acid value reaches 20 mgKOH/g to 25 mgKOH/g; and
S2. adding the blocking agent into the reaction kettle, reacting until the acid value reaches 59 mgKOH/g to 65 mgKOH/g, subjecting to a vacuum polycondensing reaction until the acid value reaches 48 mgKOH/g to 55 mgKOH/g and the melt viscosity is 7,000 mPa•s to 10,000 mPa•s; then stopping the vacuum polycondensing reaction, adding the auxiliary agent, uniformly mixing, cooling and then discharging.

9. A coating, comprising the polyester resin according to any one of claims 1 to 7.

10. A workpiece, wherein a coat formed by the coating according to claim 9 is attached to a surface of the workpiece.
